# EUROPÄISCHE PATENTANMELDUNG

(11) **EP 2 253 972 A1**
(43) Veröffentlichungstag der Anmeldung: **24.11.2010**
(21) Anmeldenummer: 10005285.1
(22) Anmeldetag: 20.05.2010
(51) Int. Cl.: G02B 5/08

(54) **Optisches Bauelement mit hoher Formstabilitaet, seine Herstellung und Verwendung**

(30) Priorität: 20.05.2009 DE 102009022034
(71) Anmelder: Layertec GmbH, 99441 Mellingen (DE)
(72) Erfinder: HEYER, Hartmut, 99441 Mellingen (DE); SCHMITZ, Peter, 07741 Jena-Wogau (DE)
(74) Vertreter: Fritzsche, Thomas

(57) **Zusammenfassung**

Es lässt sich ein optisches Bauelement geringer Dicke mit hoher Formstabilität herstellen, das ein Trägersubstrat umfasst, sowie ein darüber angeordnetes, optisches Schichtsystem, welches mit mindestens einer optischen Schicht aus einem dielektrischen Material beschichtet ist, wenn zwischen der optischen Schicht und dem Trägersubstrat eine Zwischenschicht aus einem elastischen Material angeordnet ist, das ein Elastizitätsmodul E < 200 GPa aufweist und dass für das Bauelement das Verhältnis von beschichteter Fläche zum Quadrat seiner Dicke > 50 beträgt. Es ist besonders zur Verwendung in optischen Systemen zur Erzeugung, Strahlformung, Strahlführung und Strahldiagnostik von kohärentem Laserlicht geeignet.

## Beschreibung

Die Erfindung betrifft ein optisches Bauelement mit hoher Formstabilität bzw. Formtreue, ein Verfahren zu seiner Herstellung, sowie seine Verwendung.

Bauelemente, wie z.B. hoch reflektierende Spiegel, finden in der Optik eine immer vielfältigere Verwendung. Dabei werden immer größere Anforderungen an die optischen Eigenschaften wie Reflexionsvermögen und Abweichungen in der Oberflächenform gestellt. Diese Oberflächenformabweichung wird auch als Formtreue oder Passe bezeichnet. Treten derartige Formabweichungen auf, so zeigen sich diese bei Bestrahlung mit einem Prüfbild als Verkrümmungen oder insbesondere bei einer Verkippung des Prüfsubstrates als Interferenzringe in der Abbildung eines Interferometers. Bauelemente, die nur einen Teil des auftreffenden Lichtes reflektieren, gewinnen immer mehr an Bedeutung. Derartige als Interferenzfilter wirkende Bauelemente ermöglichen einzelne Wellenlängen selektiv zu trennen und können sowohl als Spiegel als auch als Filter wirken. Im Gegensatz zu klassischen Farbfiltern, welche unerwünschte Wellenlängenbereiche aus dem auftreffenden Licht und letztlich auch die gewünschten Wellenlängen absorbieren, wird bei derartigen Optiken ausschließlich die gewünschte Wellenlänge oder Wellenlängenbereiche annähernd verlustfrei reflektiert.

Aufgrund ihrer Eigenschaft, insbesondere intensive, energiereiche Strahlen, wie beispielsweise Laserlicht, besonders verlustarm zu reflektieren, und dabei wenig Energie im Spiegelmaterial zu deponieren, sind solche Spiegel für Anwendungen in der modernen Lasertechnik besonders geeignet.

Derartige Spiegel finden vielfältige Anwendungen in der Lasertechnik, wie beispielsweise in Systemen zur Erzeugung und Strahlführung von Laserlicht. Ebenso werden solche Spiegel auch als Strahlvereiniger verwendet, um Licht verschiedener Wellenlängen in einen einzigen Strahlengang einzukoppeln und so ein Lichtstrahl aus einer Mischung scharf abgegrenzter Wellenlängen zu erzeugen.

Die beschriebenen Spiegel bestehen üblicherweise aus einem Substrat, auf dem eine, insbesondere mehrere, übereinander liegende dielektrische Schichten angeordnet sind. Durch besondere Auswahl der Anzahl der Schichten, ihrer Dicke und der jeweiligen Brechzahl des für die Schicht verwendeten dielektrischen Materials, lassen sich beliebige Wellenlängen reflektieren bzw. abtrennen. Zur Erhöhung der Reflektivität bestimmter Wellenlängenbereiche kann zwischen dem Substrat und dem dielektrischen Schichtsystem auch eine reflektierende Metallschicht aufgebracht sein.

So beschreibt beispielsweise die EP 0 620 456 A1 einen Spiegel mit hohen Reflektionswerten, bei dem auf einem Substrat eine Silberschicht angeordnet ist, welche mit einer Zinksulfidschicht überdeckt ist. Damit beim Aufbringen und Verdampfen des Zinksulfides eventuell frei werdender Schwefel nicht mit dem darunterliegenden Silber reagiert, wird darin vorgeschlagen, zwischen der Silber- und der Zinksulfidschicht mindestens eine Barriere- bzw. Zwischenschicht anzuordnen. Zur Herstellung solcher Spiegel werden die einzelnen Materialschichten in konventionellen Beschichtungsanlagen mittels Verdampfen aufgetragen. Typische Verdampfungsverfahren sind dabei das Verdampfen mittels Schiffchen oder mittels eines Elektronenstrahlverdampfers.

Die Barriere- und Zwischenschicht besteht aus einem dielektrischen Material, ist vorzugsweise ein Oxid der Elemente Silizium, Aluminium, Magnesium, der Gruppen VIb, Vb, IVb, sowie Scandium, Yttrium, Calcium, Strontium, Zink, Indium, Zinn, Zer, Holmium oder ein Oxid von Mischungen oder Legierungen dieser Elemente oder ein Oxinitrid der Elemente Ti, Ta, Zr, Si, Hf, A1 oder ein Fluorid der Elemente Magnesium, Barium, Calcium oder der Seltenen Erden. In einer besonderen Ausführungsform ist zwischen Substrat und der reflektierenden Silberschicht mindestens eine zweite Zwischenschicht aus den gleichen Materialien vorgesehen.

Die US 6,894,838 B2 beschreibt einen dielektrischen Spiegel, der ein Substrat und eine direkt auf dem Substrat angeordnete Reflektorschicht umfasst. Dabei wird die Reflektorschicht aus alternierenden Schichten, z. B. aus über 150 alternierenden Schichten, aus Materialien mit einem hohen und einem niederen Brechungsindex gebildet.

Bei der Herstellung derartiger dielektrischen Spiegel werden auf einem Substrat die dielektrischen Schichten mittels Sputterbeschichtung oder Bedampfen aufgetragen. Dabei werden beim Beschichtungsprozess hohe Spannungen erzeugt, und zwar sowohl dielektrische Druckspannungen als auch metallische Zugspannungen. Die Verwendung ebener und inbesondere dünner Substrate bewirkt dabei eine Verkrümmung des Spiegels, was auch zu einer verringerten Haftung führen kann. Insbesondere die aus den erzeugten Zug- oder Druckspannungen resultierenden Scherkräfte können eine Ablösung einzelner Schichten oder des ganzen Schichtsystems verursachen. Die Verkrümmung des Spiegels verursacht zudem eine Verschlechterung der Formtreue oder Passe der Spiegeloberfläche, die die Abbildungsgenauigkeit des reflektierten, gebeugten oder gefilterten Lichtstrahls negativ beeinflusst.

Um die Spannungen und damit das Durchbiegen des Träger- bzw. Substratmaterials zu verhindern, werden üblicherweise relativ dicke Substrate verwendet, welche den durch die Schichten ausgeübten Spannungen widerstehen können. Um bei solchen Anordnungen das Gewicht zu reduzieren, wird vom Trägersubstrat auf seiner Rückseite Material entfernt, wobei Stege zur Formstabilisierung stehenbleiben. Damit lässt sich zwar eine Gewichtsreduzierung erreichen, die jedoch nicht immer ausreichend ist.

T. Gessner et al "Silicon mirror arrays by using bulk and surface micro-machining" (SPIE Vol.3008 1997 S.296-305) beschreibt, dass ein Durchbiegen von dünnen Bauelementen dadurch vermieden werden kann, wenn auf der rückseitigen Oberfläche des Trägersubstrates ein bezügliche dem Spannungsverhalten gleiches Schichtsystem aufgetragen wird, um eine Kompensation des beim Auftragen und bei der Erwärmung des Bauelementes entstehender Spannungsstress zu kompensieren.

F. Richter et al. "Optical properties and mechanical stress in SiO2/Nb2O5 multilayers" (Thin Solid Films Vol.389 2001 S.278-283) beschreibt eine Kompensation der erzeugten Schichtspannung durch das Auftragen einer weiteren Schicht, welche genau die entgegengesetzte Schichtspannung erzeugt. Dabei soll die durch das dielektrische Schichtsystem mit Siliziumoxid und Nioboxid erzeugte Druckspannung durch eine durch die Auftragung von Chrom erzeugte Zugspannung mittels Magnetron-Sputterverfahren kompensiert werden.

Für bewegliche Anordnungen, wie beispielsweise bei Scannern, ist es insbesondere notwendig, die Gesamtmasse des Spiegels möglichst gering zu halten. Damit müssen jedoch auch die Schichtträger bzw. Substrate entsprechend dünn gewählt werden, so dass diese nicht mehr ohne Weiteres den Druck- und Zugspannungen der aufgebrachten Schichten widerstehen können. Dies führt beispielsweise in der Strahlführung des Laserlichtes in Scannersystemen zu Strahlrichtungs- und querschnittsänderungen. Bei Laseranwendungen in der Materialbearbeitung mit energiereicher Laserstrahlung kommt es zudem zu Ungenauigkeiten beim Verschweißen oder Trennen des zu bearbeitenen Targetmaterials.

Die oben beschriebenen Schichtspannungen beeinflussen auch unter bestimmten Bedingungen die Langzeitstabilität und die Laserfestigkeit negativ. Insbesondere sind dielektrische Spiegel bei hoher Belastung energiereicher Laserstrahlung auch hohen intrinsischen Spannungen ausgesetzt, die zusätzlich zu den oben beschriebenen Schichtspannungen wirken.

Die Erfindung hat daher zum Ziel, ein optisches Bauelement bereitzustellen, das bei geringer Dicke eine hohe Formstabilität aufweist und das die zuvor geschilderten Probleme überwindet. Dabei soll das optische Bauteil insbesondere für Scanner-Anordnungen geeignet sein. Dieses Ziel wird durch die in den Ansprüchen definierten Merkmale erreicht.

Erfindungsgemäß wird daher vorgeschlagen, bei einem dünnen Trägersubstrat mit einem Verhältnis der beschichteten Fläche zum Quadrat seiner Dicke > 50 zwischen dem Trägersubstrat und der optischen Schicht eine Zwischenschicht aus einem Material anzuordnen, welches einen E-Modul < 200 GPa (Youngsmodul) aufweist. In einer bevorzugten Ausführungsform weist das E-Modul einen Maximalwert von 180 GPa, insbesondere jedoch von maximal 150 GPa auf. In vielen Fällen haben sich Maximalwerte von 130 GPa, insbesondere 100 GPa als zweckmäßig erwiesen, wobei Maximalwerte von 95, insbesondere von 90 besonders bevorzugt sind. Ganz besonders bevorzugt sind maximale Werte von 85 bzw. 80 GPa. Alle diese vorgenannten Werte beziehen sich auf Raumtemperatur.

Geeignete Materialien für die Zwischenschicht sind beispielsweise weiche Metalle wie Silber, Aluminium und Gold. Prinzipiell eignen sich hierfür auch andere anorganische und auch organische Materialien mit einem geringen E-Modul. Derartige Materialien können auch transparent sein.

Es wurde gefunden dass sich mit einer solchen Anordnung von Schichten optische Bauelemente wie z. B. Spiegel, und Filter herstellen lassen, die extrem dünn sind, und ein sehr geringes Gewicht aufweisen, aber dennoch eine außergewöhnliche Formstabilität aufweisen. Durch ihr außergewöhnlich geringes Gewicht sind sie daher besonders für bewegliche optische Bauteile geeignet, wie sie z.B. in Scannern verwendet werden.

Mit einer solchen Anordnung lassen sich überraschenderweise auch formstabile Bauelemente herstellen, die ein Verhältnis ihrer beschichteten Fläche zum Quadrat ihrer Dichte von größer als 50 aufweisen. Insbesondere lassen sich sogar Verhältnisse von Fläche: (Dicke)² von > 100, vorzugsweise > 200 herstellen, wobei Verhältnisse von > 250 besonders bevorzugt sind.

In vielen Fällen sind sogar Verhältnisse von > 300 bzw. > 350 bei ausgezeichneter Formstabilität trotz extrem dünner Dicke herstellbar. Sogar formstabile Elemente mit einem Verhältnis größer 400 bzw. 450 bzw. sogar 500 sind erfindungsgemäß zu erreichen. Unter beschichteter Fläche wird dabei die Fläche derjenigen Seite verstanden, auf der die optischen Schichten angeordnet sind. Die Dicke wird durch die zur Oberfläche senkrecht verlaufende maximale Stärke definiert.

Bevorzugte Trägersubstrate für die erfindungsgemäßen optischen Bauelemente umfassen insbesondere optisches Glas, wie beispielsweise Quarzglas, oder Schott-BK7-Glas, Borofloatglas oder auch Glaskeramiken wie Zerodur, optische Kristalle wie beispielsweise dotiertes oder undotiertes YAG, CaF₂, MgF₂ oder auch optische Saphire sowie optische Halbleiter wie beispielsweise Si oder auch metallische Nitrite wie beispielsweise TiN oder Metalle wie Al, Cu, Ni bzw. Legierungen wie beispielsweise Edelstahl oder Al/Si-Legierungen als auch insbesondere transparente Kunststoffe. Vorzugsweise weisen die erfindungsgemäßen Bauteile als Substrat optische Gläser sowie davon abgeleitete Materialien wie Glaskeramiken und/oder optischer Kristalle auf.

In einer bevorzugten Ausführungsform wird zwischen der elastischen Zwischenschicht und dem Trägersubstrat eine dünne Schicht aus einem typischen, dem Fachmann bekannten Haftvermittler angeordnet.

In einer weiteren bevorzugten Ausführungsform ist zwischen der Zwischenschicht und der optischen Schicht und/oder zwischen Substrat und/oder Haftvermittler und der Zwischenschicht eine Barriereschicht angeordnet, die eine Diffusion von Teilen aus der Zwischenschicht in optische Schicht sowie vice versa verhindert oder zumindest stark verringert. Für die Barriereschicht sind sämtliche Materialien geeignet, welche eine ausreichende Festigkeit gegenüber Spannungen und Drücken aufweisen und die eine Migration der in der Pufferschicht entstehenden Risse, Spannungen und Löcher an die darüberliegende optische Schicht verhindern. Vorzugsweise ist eine derartige Barriereschicht eine Oxidschicht wie beispielsweise SiO₂, Al₂O₃ , Ta₂O₅, Nb₂O₅, oder eine Nitridschicht wie beispielsweise SiN, TiN oder eine Sulfidschicht wie beispielsweise ZnS, oder eine Fluoridschicht wie beispielsweise AlF₃, MgF₂. Typische Barriereschichten weisen eine Dicke von mindestens 50 nm bis maximal 1 µm, vorzugsweise maximal 500 nm auf.

Schließlich wird über der zuvor beschriebenen Schichtfolge eine Anordnung einer oder mehrerer Funktionsonsschichten angeordnet, welche die selektive Reflexion und Transmission der gewünschten Wellenlängen aus einer Vielzahl verschiedener Wellenlängen bewirken. Typische Funktionsschichten sind insbesonders dielektrische Schichten. Dabei weisen die Schichten eine für die jeweils zu interferierenden Wellenlänge notwendige Schichtdicke auf, die dem Fachmann allgemein bekannt sind. Typische Schichtdicken der einzelnen Schichten weisen üblicherweise eine Dicke zwischen 10 nm und 10 µm auf.

Typische optische Schichtsysteme bzw. Funktionsschichtsysteme umfassen eine oder mehrere Abfolgen von optisch hoch- und niedrigbrechenden Schichtmaterialien wie beispielsweise SiO2 und Metalloxide wie beispielsweise Ta₂O₅, Nb₂O₅, Al₂O₃, TiO₂, CrO₂, ZrO₂, HfO₂ oder Y₂O₃. Ebenfalls geeignet sind Metallfluoride wie beispielsweise MgF₂, LaF₃, AlF₃, YF₃, NdF₃ und/oder optische Halbleiter wie Si oder Nitride wie TiN, Si₃N₄ oder TaN oder auch Metalle wie Cr, Al, Ag, Cu, und/oder Au.

Zur Herstellung der erfindungsgemäßen Anordnung bzw. der optischen Bauelemente, wird üblicherweise ein Trägersubstrat verwendet, das eine maximale Oberflächenformabweichung (Passfehler), gemessen durch die Peak-To-Valley-Differenz, bei planen Flächen oder durch den Pfeilhöhenfehler bei gewölbten Kugelflächen von weniger als der Hälfte der Wellenlängen in einem dynamischen Prüfbereich mit einem Durchmesser bis zu 50 mm aufweist. Erfindungsgemäß ist es bevorzugt, Substrate mit einem Passfehler von weniger als 40 bzw. 30%, insbesondere von maximal 25% der Wellenlänge zu verwenden (1/4λ). Diese Werte werden typischerweise mittels der DIN-Norm 10110-5 ermittelt.

Am fertigen optischen Bauelement lässt sich mittels der erfindungsgemäßen Vorgehensweise eine Formstabilität erreichen, d.h. eine Oberflächenformabweichung (Passfehler), der max. 1,5λ bzw. 1λ der verwendeten Wellenlänge beträgt. Üblicherweise beträgt der max. Passfehler höchstens 1,31λ bzw. 1,1λ, wobei Werte von höchstens 0,81λ bzw. λ/2 und sogar höchstens λ/4 bevorzugt sind.

Darüber hinaus weisen derartige optische Bauelemente ein optisch glattes Funktionsschichtsystem auf, das eine mittlere quadratische Abweichung der Rauheit von weniger als 20, insbesondere von weniger als 15 nm aufweist. Besonders bevorzugte Elemente weisen eine Rauheit von weniger als 10 nm auf. Diese Werte werden typischerweise mittels der DIN-Norm 10110-8 ermittelt.

In einer weiteren erfindungsgemäß bevorzugten Ausführungsform ist das optische Funktionssystem ein Reflexionsschichtsystem, insbesonders ein hochreflektierendes, das für mindestens eine Wellenlänge von vorzugsweise zwischen 150 und 300 nm einen Reflexionsgrad von mindestens 90% aufweist. In einer weiteren bevorzugten Ausführungsform weist ein derartiges hoch reflektierendes Schichtsystem im Wellenlängenbereich von vorzugsweise zwischen 300 nm und 500 nm einen Reflexionsgrad von mindestens 99% auf und/oder im Wellenlängenbereich von vorzugsweise zwischen 500 nm bis 5000 nm einen Reflexionsgrad von mindestens 99,8%.

Die Erfindung betrifft daher auch die Verwendung derartiger Spiegel in besonders rasch, d. h. mit hoher Geschwindigkeit bewegbaren Bauteilen.

Dabei werden sie zur Erzeugung sowie vorzugsweise zur Strahlformung, Strahlführung und Strahldiagnostik von Laserlicht, insbesonders koherentem Laserlicht, wie beispielsweise in Scanvorrichtungen und Sensorsystemen, sowie zur Strahlführung von künstlich erzeugtem oder natürlichen, inkoherentem Licht verwendet, wie zum Beispiel in Beamern. Besonders geeignet sind die erfindungsgemäßen optischen Bauteile als fokussierende Spiegel, Umlenkspiegel und mechanisch oder elektrisch bewegbare Ablenkspiegel, insbesonders solche, die mit hoher Geschwindigkeit bewegt werden.

Desweiteren betrifft die Erfindung auch Anordnungen, die derartige optische Bauelemente mit hoher Geschwindigkeit, insbesondere hoher Beschleunigung mit wechselnden Bewegungsrichtungen zur Strahlformung und Strahlführung bewegen. Derartige Anordnungen können für die zuvor genannten Verwendungen eingesetzt werden.

Die Erfindung soll an einem der folgenden Beispiele näher erläutert werden:
Hergestellt wurden zwei Laserspiegel mit dünner Substratdicke und mit einem dielektrischen Schichtsystem,
   wobei eine Reflektivität größer 99.9% bei der Wellenlänge 1030 nm erzielt wurde. Beide Spiegel wurden mit dem identischem dielektrischen Schichtsystem in einer Charge hergestellt. Zusätzlich wurde beim Spiegel Nr. 2 eine weiche Metallschicht als Zwischenschicht einschließlich Barriereschicht und Haftvermittler zwischen Substrat und dielektrischen Schichtsystem aufgetragen.

### Spiegel Nr. 1:

dielektrisches Wechselschichtsystem SiO₂/Ta₂O₅
Substrat Quarzglas 0=25mm /490mm² d=1.0mm

### Spiegel Nr. 2:

dielektrisches Wechselschichtsystem SiO₂/Ta₂O₅ Zwischenschicht Ag
Substrat Quarzglas 0=25mm (490 mm²) d=1.0mm

Die Messung der Ebenheit wurde mit einem Interferometer Typ Zygo GPI XP (Zygo Corp., Middlefield, CT, USA) mit der Wellenlänge 633 nm durchgeführt. Gemessen wurden jeweils die Ebenheitsangaben Peak-To-Valley-(PV-)Differenz (SAG) und die Unregelmäßigkeit (IRR) der Substrate vor der Beschichtung sowie die Ebenheit am beschichten Spiegel. Die Auswertung ergab folgende Ergebnisse bezogen auf 546 nm nach DIN 10110-5:

| | Ebenheit* unbeschichtetes Substrat 3/ SAG (IRR) in [fr] | Ebenheit* beschichteteter Spiegel 3/ SAG (IRR) in [fr] |
|---|---|---|
| Spiegel Nr. 1 | 0,00 (0,20) | 3,69 (0,41) |
| Spiegel Nr. 2 | 0,21 (0,19) | 1,34 (0,20) |

| | | |
|---|---|---|
| *Angabe der Ebenheit nach DIN EN ISO 10110-5 | | |

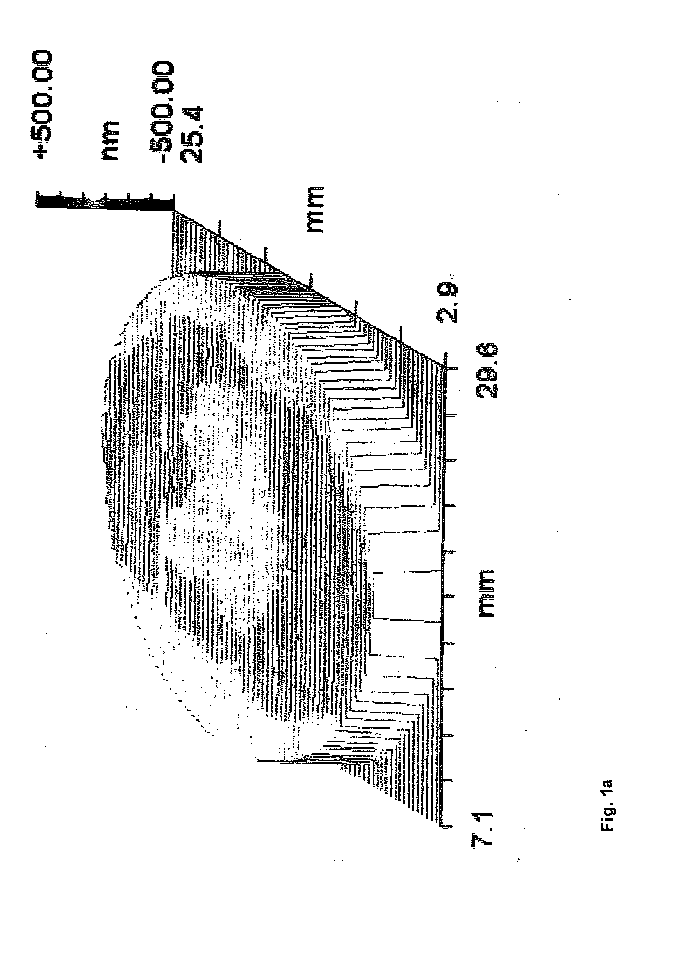

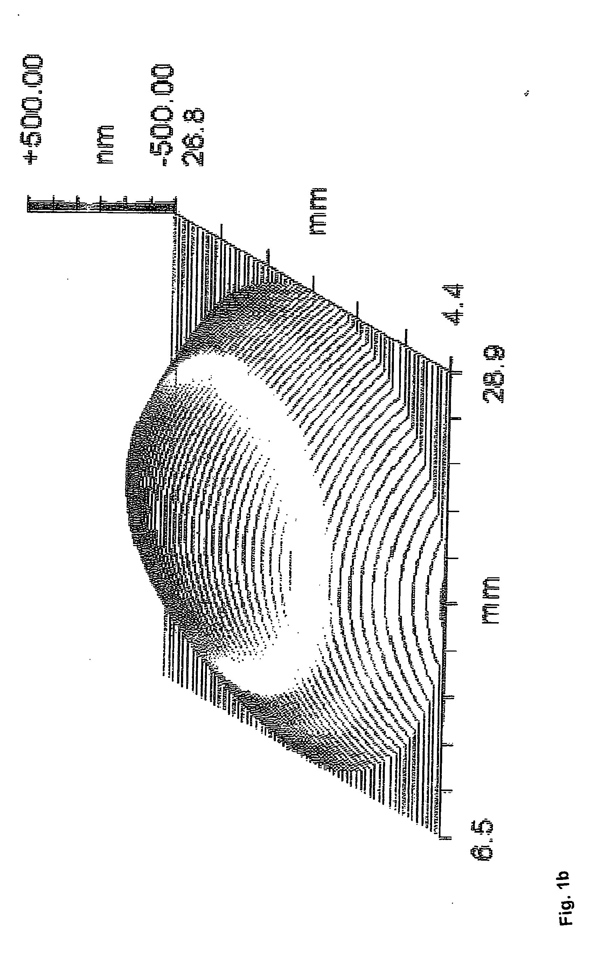

Es zeigen Fig. 1a die mit dem Interferometer bestimmte Ebenheit der Oberfläche von Spiegel 1;

Fig. 1b zeigt dieselbe Oberfläche nach dem Aufbringen eines dielektrischen Wechselschichtsystems.

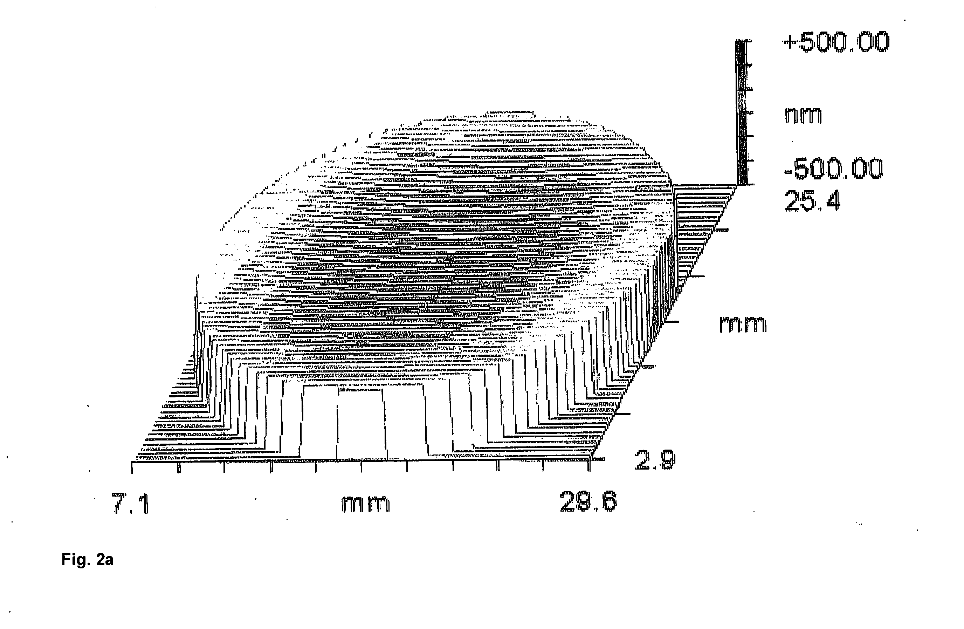

Fig. 2a zeigt die Ebenheit des unbeschichteten Substrats von Spiegel 2;

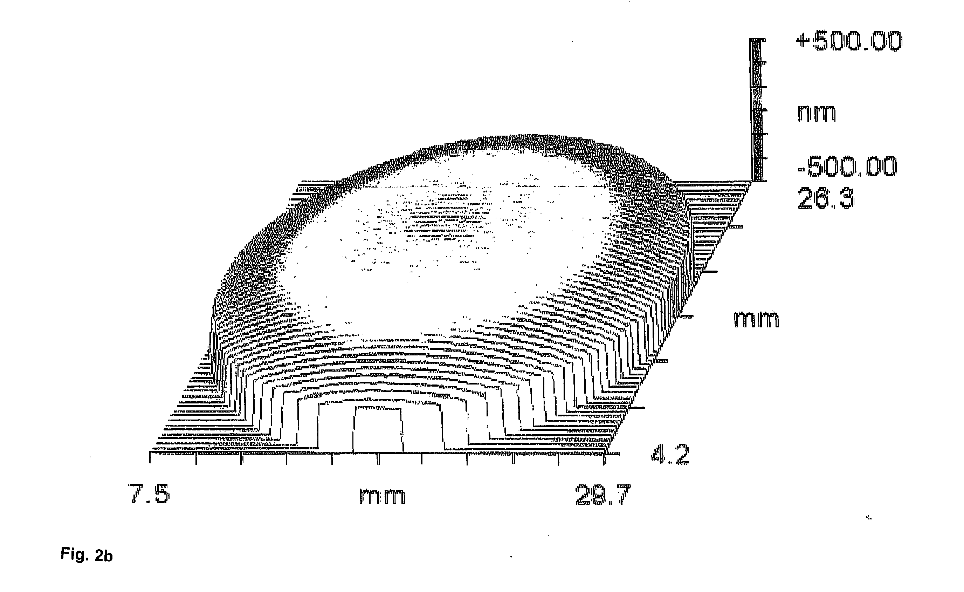

Fig. 2b zeigt die Ebenheit von Spiegel 2 nach dem Auftragen des dielektrischen Wechselschichtsystems mit einer Zwischenschicht aus Silber.

Der dielektrische Spiegel Nr. 1 ohne Zwischenschicht erfährt durch das Aufbringen des dielektrischen Wechselschichtsystems eine Veränderung der Ebenheit von 3,7 Ringen. Dies entspricht einer Verbiegung gemessen als Peak-To-Valley-(PV-)Differenz um mehr als 1 µm über dem Prüfdurchmesser 22,5 mm. Im Gegensatz dazu kommt es beim Spiegel Nr. 2 nur zu einer Verbiegung von ca. 1,1 Ringen unter Berücksichtigung der Ebenheit des unbeschichteten Substrates. Dies entspricht einer Peak-To-Valley-(PV-) Differenz von ca. 300 nm über dem Prüfdurchmesser 22,5 mm. Die Zwischenschicht hat demnach die Verbiegung, die durch die Druckspannung des dielektrischen Wechselschichtsystems hervorgerufen wird, um 70% reduziert. Weitere Optimierungen des Beschichtungsprozesses können die Wirkung der Zwischenschicht auf die Verbiegung des Spiegels zusätzlich verbessern.

## Patentansprüche

1. Optisches Bauelement mit hoher Formstabilität und geringer Dicke, umfassend ein Trägersubstrat, sowie ein darüber angeordnetes, optisches Schichtsystem, welches mit mindestens einer optischen Schicht aus einem dielektrischen Material beschichtet ist, **dadurch gekennzeichnet, dass** zwischen der optischen Schicht und dem Trägersubstrat eine Zwischenschicht aus einem elastischen Material angeordnet ist, das ein Elastizitätsmodul E < 200 GPa aufweist und dass für das Bauelement das Verhältnis von beschichteter Fläche zum Quadrat seiner Dicke > 50 beträgt.

2. Optisches Bauelement nach Anspruch 1, **dadurch gekennzeichnet, dass** das Trägersubstrat aus optischem Glas, Glaskeramik, optischen Kristallen, Halbleitern, metallischen Nitriden, Metallen und/oder Metalllegierungen besteht.

3. Optisches Bauelement nach einem der vorhergehenden Ansprüche, **dadurch gekennzeichnet, dass** zwischen dem elastischen Material und der optischen Schicht eine Barriereschicht angeordnet ist.

4. Optisches Bauelement nach einem der vorhergehenden Ansprüche, **dadurch gekennzeichnet, dass** die Barriereschicht aus einem Oxid der Elemente Silizium, Aluminium, Magnesium, der Gruppen VIb, Vb, IVb, sowie Scandium, Yttrium, Calcium, Strontium, Zink, Eisen, Indium, Zinn, Zer, Holmium oder einem Oxid von Mischungen oder Legierungen dieser Elemente oder einem Oxinitrid der Elemente Ti, Ta, Zr, Si, Hf, Al oder einem Fluorid der Elemente Magnesium, Barium, Strontium, Calcium, Blei oder der Seltenen Erden besteht.

5. Optisches Bauelement nach einem der vorhergehenden Ansprüche, **dadurch gekennzeichnet, dass** zwischen der Schicht aus dem elastischen Material und dem Trägersubstrat eine Schicht aus einem Haftvermittler angeordnet ist.

6. Optisches Bauelement nach einem der vorhergehenden Ansprüche, **dadurch gekennzeichnet, dass** der Haftvermittler aus einem Oxid der Elemente Silizium, Aluminium, Tantal, Niob, Titan, Chrom, Zirkon, Hafnium, Yttrium oder einem Oxinitrid der Elemente Ti, Ta, Zr, Si, Hf, Al oder Metallen und/oder Metalllegierungen besteht.

7. Optisches Bauelement nach einem der vorhergehenden Ansprüche, **dadurch gekennzeichnet, dass** die optische Schicht optisch glatt ist und eine mittlere quadratische Abweichung der Rauheit gemäß DIN 10110-8 von weniger als 10 nm aufweist.

8. Optisches Bauelement nach einem der vorhergehenden Ansprüche, **dadurch gekennzeichnet, dass** die optische Schicht eine Reflexionsschicht ist.

9. Optisches Bauelement nach einem der vorhergehenden Ansprüche, **dadurch gekennzeichnet, dass** das Reflexionsschichtsystem im Sinne optischer Anwendungen hochreflektierend ist und dass für mindestens eine Wellenlänge insbesondere im Wellenlängenbereich von 150 nm bis 300 nm ein Reflexionsgrad von mindestens 90% oder im Wellenlängenbereich von 300 nm bis 500 nm ein Reflexionsgrad von mindestens 99% oder im Wellenlängenbereich von 500 nm bis 5000 nm ein Reflexionsgrad von mindestens 99.8% erreicht wird.

10. Verfahren zur Herstellung eines optischen Bauelements mit hoher Formstabilität, umfassend das Auftragen einer optischen Schicht aus einem optisch wirksamen Material auf ein glattes Substrat, sowie das Auftragen mindestens einer dielektrischen Schicht über der Schicht, **dadurch gekennzeichnet, dass** vor dem Auftragen der optischen Schicht eine Schicht aus einem Material mit einem E-Modul < 200 GPa derart aufgetragen wird, dass diese zwischen dem Trägersubstrat und der Reflexionsschicht liegt.

11. Verwendung des optischen Bauelements nach einem der Ansprüche 1 bis 10 in optischen Systemen zur Erzeugung, Strahlformung, Strahlführung und Strahldiagnostik von kohärentem Laserlicht, wie in Resonatoren, ScanVorrichtungen und Sensorsystemen, sowie zur Strahlführung von künstlich erzeugtem oder natürlichem inkohärenten Licht, wie in Beamern und Fluoreszenzmikroskopen.

12. Verwendung nach Anspruch 11, als Resonatorspiegel, fokussierende Spiegel, Umlenkspiegel, mechanisch oder elektrisch bewegliche Ablenkspiegel.

13. Anordnung zur Strahlführung von Laserlicht mittels eines bewegbaren optischen Bauelements mit hoher Formstabilität, umfassend ein Trägersubstrat, sowie ein darüber angeordnetes, optisches Schichtsystem, welches mit mindestens einer optischen Schicht aus einem dielektrischen Material beschichtet ist, **dadurch gekennzeichnet, dass** zwischen der optischen Schicht und dem Trägersubstrat eine Zwischenschicht aus einem elastischen Material angeordnet ist, das ein Elastizitätsmodul E < 200 GPa aufweist.
